# EUROPEAN PATENT SPECIFICATION

(11) **EP 3 103 983 B1**
(45) Date of publication and mention of the grant of the patent: **27.09.2017**
(21) Application number: 15171423.5
(22) Date of filing: 10.06.2015
(51) Int. Cl.: F01P 11/20, F02N 19/10, F24H 1/00

(54) **ELECTRICALLY OPERATED HEATER FOR HEATING A HEAT TRANSPORT LIQUID**
ELEKTRISCH BETRIEBENE HEIZUNG ZUR ERWÄRMUNG EINER WÄRMETRANSPORTFLÜSSIGKEIT
CHAUFFAGE À COMMANDE ÉLECTRIQUE POUR LIQUIDE DE TRANSPORT DE CHALEUR

(43) Date of publication of application: 14.12.2016
(73) Proprietor: Eberspächer AB, 461 38 Trollhättan (SE)
(72) Inventor: Arvidsson, Svante, 46241 Vänersborg (SE); Eriksson, Fredrik J., 46152 Trollhättan (SE); Hermansson, Patrik, 46144 Trollhättan (SE)
(74) Representative: RLTG

(56) References cited:
- US-A- 3 236 220
- US-A- 4 398 081
- US-A- 4 591 691

## Description

The present invention relates to a heating system comprising an electrically operated heater for heating a heat transport liquid, for example, for heating coolant circulated in a coolant circuit of a combustion engine of a vehicle.

For preheating the engine and/or the interior space of a vehicle, it is known to use fuel-operated heating devices. Due to the exhaust gases generated by fuel-operated heating devices, such devices cannot normally be used in closed areas, for example, closed garages. For avoiding this problem, an electrically operated heater may be provided which can be connected to the mains providing an AC voltage supply system. The AC voltage supplied by the AC voltage supply system is applied to the heater for generating heat which can be transferred to the coolant provided as a heat transport liquid within the coolant circuit of a combustion engine.

US 3 236 220 A discloses an auxiliary heating system by means of which the coolant circulated in a coolant circuit of an internal combustion engine can be heated. This auxiliary heating system comprises a burner constituting a heat source for heating the coolant. The electronic components of this auxiliary heating system as well as the electronic components provided in association to the coolant circuit of the internal combustion engine may either be operated by means of a DC voltage supplied by a battery as an energy source or may be operated by means of a DC voltage supplied by a DC converter converting an AC voltage applied thereto into a DC voltage. Another auxiliary heating system is disclosed in US 4 591 691 A. It is an object of the present invention to provide a heating system comprising an electrically operated heater, by means of which the heat generated by the heater can be transferred to a heat transport liquid while providing a simple construction.

According to the present invention, this object is achieved by a heating system for heating a heat transport liquid, in particular for heating coolant in a coolant circuit of a combustion engine of a vehicle, comprising:
- a heat transport liquid pump for circulating a heat transport liquid in a heat transport liquid circuit,
- an electrically operated heater for heating the heat transport liquid circulated in the heat transport liquid circuit, comprising:
   - a first connecting means for providing an electric connection between the heater and an AC voltage supply system,
   - a second connecting means for providing an electric connection between a DC voltage supply system and the heat transport liquid pump in a condition in which an AC voltage is applied to the first connecting means.
- a DC voltage supply system comprising at least one rechargeable battery,
wherein the second connecting means is arranged such as to provide the electric connection between the DC voltage supply system and the heat transport liquid pump in a condition in which an AC voltage is applied to the first connecting means.

When using the heater of the present invention, the heat transport liquid pump is energized by the DC voltage provided by the DC voltage supply system. Therefore, providing means for generating the DC voltage used for energizing the heat transport liquid pump from the AC voltage applied to the heater is not necessary. Instead, the DC voltage supply system which is used as a power supply for various electronic systems of a vehicle can also be used for providing the energy necessary for operating the heat transport liquid pump.

For providing a simple and compact construction, the first connecting means and/or the second connecting means may be integrated into the heater.

For applying the DC voltage to the heat transport liquid by using the AC voltage as a switching voltage, the second connecting means may comprise a relay switchable into an electrically connecting condition by an AC voltage applied to the first connecting means.

For using the AC voltage as a switching voltage, the heat transport liquid pump may be electrically connected to the second connecting means for applying the DC voltage supplied by the DC voltage supply system to the heat transport liquid pump in a condition in which an AC voltage is applied to the first connecting means.

According to a further preferred aspect, a heat exchanger arrangement comprising a fan for transferring heat from the heat transport liquid to air may be provided and the system may further comprise a third connecting means for applying the DC voltage supplied by the DC voltage supply system to the fan in a condition in which an AC voltage is applied to the first connecting means and a temperature of the heat transport liquid is above a predetermined threshold temperature. The third connecting means may comprise a thermostat-controlled relay.

In an alternative embodiment, a heat exchanger arrangement comprising a fan for transferring heat from the heat transport liquid to air may be provided and the system may further comprise a third connecting means for applying the DC voltage supplied by the DC voltage supply system to the fan in a condition in which an AC voltage is applied to the first connecting means and a predetermined period of time has elapsed since the heating operation of the heater has started. Such a construction makes use of the effect that, after the predetermined period of time has elapsed, the heat transport liquid will have a sufficiently high temperature for transferring heat from this liquid to the air to be heated.

The third connecting means may be electrically connected to the second connecting means for applying the DC voltage supplied by the DC voltage supply system to the third connecting means in a condition in which an AC voltage is applied to the first connecting means. In such a construction, the AC voltage which can be used as a switching voltage for energizing the heat transport liquid pump can also be used for triggering the switching of the third connecting means into its electrically connecting condition, if the temperature of the heat transport liquid is above the threshold temperature.

For providing the connection between the DC voltage supply system and the fan of the heat exchanger arrangement, the third connecting means may be electrically connected to the DC voltage supply system for providing an electric connection between the DC voltage supply system and the fan in a condition in which the DC voltage supplied by the DC voltage supply system to the second connecting means is applied to the third connecting means as a switching voltage and the temperature of the heat transport liquid is above the predetermined threshold temperature or the predetermined period of time has elapsed.

For keeping the DC voltage supply system in a condition in which it is able to energize the heat transport liquid pump, a charging means may be provided for applying a charging voltage to the DC voltage supply system in a condition in which an AC voltage is applied to the first connecting means. Preferably, the charging means is arranged for generating the charging voltage based on an AC voltage applied to the first connecting means.

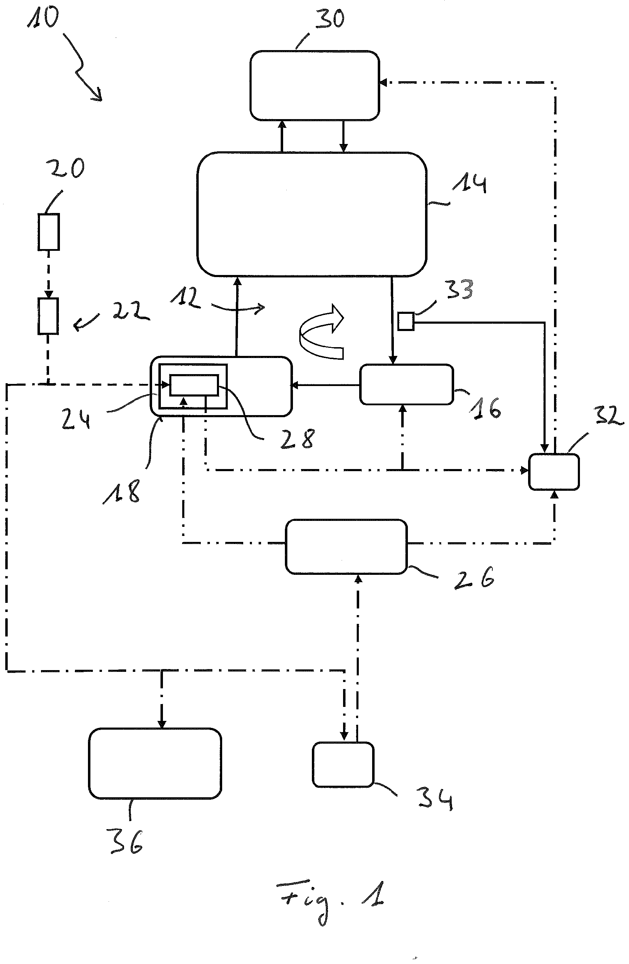

The present invention will now be explained with reference to Fig. 1, which shows a principal construction of a heating system of a vehicle comprising an electrically operated heater.

The heating system 10 shown in Fig. 1 is provided for preheating the coolant circulated in a coolant circuit 12 of an internal combustion engine 14. For circulating the coolant, for example, water, in the coolant circuit 12, a pump 16 is provided. Further, a heater 18 is integrated into the coolant circuit 12 for generating and transferring heat to the coolant circulated by the pump 16 for thereby preheating the coolant as well as the internal combustion engine 14. The heater 18 is electrically operated and is arranged for receiving an AC voltage provided by an AC voltage supply system 20, for example, the mains provided within a garage. For connecting the heater 18 to the AC voltage supply system, a first connecting means 22, for example, comprising a cable connected to the heater 18 or a plug provided in the heater 18 may be provided.

The heater 18 may comprise a controller 24 receiving the AC voltage and energizing one or a plurality of heating coils within the heater by means of which the coolant circulated in the coolant circuit 12 can be heated.

The heating system 10 further comprises a DC voltage supply system 26, for example, comprising one or a plurality of rechargeable batteries of the vehicle. While the AC voltage supply system 20 may be arranged for providing a 230 V AC voltage, the DC voltage supply system 26 may be arranged for providing a 12 V DC voltage.

The pump 16 of the cooling liquid circuit 12 is generally arranged for being energized by a DC voltage. According to the principles of the present invention, therefore, the heating system 10 is arranged for applying the DC voltage supplied by the DC voltage supply system 26 to the pump 16, while the AC voltage is applied by the AC voltage supply system 20 via the first connecting means 22 to the heater 18. Therefore, an electric circuit for transforming a 230 V AC voltage of the AC voltage supply system 20 into a 12 V DC voltage for energizing the pump 16 can be avoided.

For applying the DC voltage of the DC voltage supply system 26 to the pump 16, a second connecting means 28 is associated with the heater 18. For example, the second connecting means 28 may be integrated into the heater 18, in particular into the controller 24 thereof. The second connecting means 28 may comprise a relay which is switchable into an electrically connecting condition by the AC voltage applied to the heater 18 during the heating operation thereof. For example, the second connecting means 28, i.e. the relay, may comprise a 230 V AC coil which is triggered by the AC voltage applied to the heater 18 via the first connecting means 22.

When providing the electric connection between the AC voltage supply system 20, i.e. the mains, and the heater 18, the second connecting means 28 is switched into its electrically connecting condition and, therefore, the DC voltage supplied by the DC voltage supply system 26 is applied to the pump 16. Due to this, the pump 16 is put into operation during the heating operation of the heater 18 so that a circulation of the coolant within the coolant circuit 12 is generated during the heating operation of the heater 18. Therefore, not only all the coolant provided within the coolant circuit 12 can be heated, but also the engine 14 through which this coolant is passed. As soon as the heater 18 becomes disconnected from the AC voltage supply system 20, the second connecting means 28, i.e. the relay, transitions into its non-conducting condition and, therefore, the pump 16 becomes disconnected from the DC voltage supply system 26. This means that, simultaneously with terminating the operation of the heater 18, the operation of the pump 16 is terminated.

The heating system 10 may further comprise a heat exchanger arrangement 30 through which the coolant circulated in the coolant circuit 12 is passed. In the heat exchanger arrangement 30, heat transported by the coolant acting as a heat transport liquid can be transferred to air which, by means of a fan of the heat exchanger arrangement 30, can be blown into an interior space of the vehicle for additionally preheating this interior space. For operating this fan, the DC voltage supplied by the DC voltage supply system may be applied to the fan via a third connecting means 32. This third connecting means 32 may comprise a thermostat-controlled relay or switch detecting the temperature of the coolant circulated in the coolant circuit 12 by means of a temperature sensor arrangement 33, for example, comprising a bimetal switch. The third connecting means 32 is further connected to the second connecting means 28 such that the third connecting means 32 is arranged to receive two switching signals. One of these switching signals is the DC voltage supplied by the DC voltage supply system via the second connecting means 28 in a situation in which the AC voltage is applied to the heater 18. The second switching signal is a signal provided by the temperature sensor arrangement 33 in a situation in which the temperature of the coolant is above a predetermined threshold temperature.

The connection between the thermostat-controlled relay and it's temperature sensor arrangement 33, which for example may comprise a bimetal member, may be realized in different ways. According to one option there may be a mechanical connection between the temperature sensor arrangement 33 and it's bimetal member, respectively, and a switching portion provided within the thermostat-controlled relay, such that a temperature induced deformation of the bimetal member generates a force as a mechanical output providing a switching signal by means of which a switching portion of the thermostat-controlled relay is operated. In another option the temperature sensor arrangement 33 may be arranged for providing an electric output which is applied to the switching portion of the thermostat-controlled relay as a switching signal.

Further it is to be noted that the thermostat-controlled relay and it's temperature sensor arrangement 33, respectively, are shown in Fig. 1 for explaining the function of these members. These members may be provided at other locations within the heating system 10. For example, the thermostat-controlled relay and it's temperature sensor arrangement 33 may be arranged within one common housing and/or may be arranged in association to the heater 18, such that the temperature of the coolant can be detected near to the heater 18.

The third connecting means 32, i.e. the thermostat-controlled relay, is brought into its conducting condition only if both these switching signals are applied thereto. If this is the case, then the DC voltage supplied by the DC voltage supply system 26 is applied to the fan of the heat exchanger arrangement 30 via the third connecting means 32. If the temperature of the coolant is not above the predetermined threshold temperature, which means that the temperature sensor arrangement 33 does not deliver the necessary switching signal, the connection between the DC voltage supply system 26 and the fan of the heat exchanger arrangement 30 is interrupted. This means that, in a situation in which the temperature of the coolant is not high enough, no heat is withdrawn from the coolant in the heat exchanger arrangement 30 for heating the interior space of the vehicle so that, first of all, the coolant and the internal combustion engine 14 can be brought into a desired preheated condition. After this condition has been obtained and the temperature of the coolant has exceeded the predetermined threshold temperature, heat transported by the coolant can be used for additionally heating the air blown into the interior space of the vehicle.

In a situation in which the AC voltage is not applied to the heater 18 and, therefore, the second connecting means is not in its electrically connecting condition, the DC voltage supplied by the DC voltage supply system 26 is not applied to the pump 16 and, additionally, is not applied to the third connecting means 32 as one of the switching signals. This means that, in this situation in which neither the heater 18 nor the pump 16 is operated, the fan of the heat exchanger arrangement 30 is not connected to the DC voltage supply system 26 irrespective of the coolant temperature. Therefore, an excessive loss of heat via the heat exchanger arrangement 30 can be avoided.

In an alternative embodiment the direct electric connection between the DC voltage supply system 26 and the thermostatic-controlled relay 32 may be omitted. In this embodiment the DC voltage supplied by the DC voltage supply system 26 and applied to the pump 16 and the thermostatic-controlled relay 32 via the second connecting means 28 may be directly applied to the fan of the heat exchanger arrangement 30 via the thermostatic-controlled relay 32, if the output signal of the temperature sensor arrangement 33 indicates a sufficiently high temperature of the coolant. In this embodiment the output signal of the temperature sensor arrangement 33 is the only switching signal applied to the thermostatic-controlled relay providing the third connecting means 32

According to a further option of the heating system 10 of the present invention, a battery charger 34 and/or an additional heater 36 which may be arranged within the interior space of the vehicle may be provided. Both these components may be connected to the AC voltage supply system 20 via the first connecting means 22 or parallel to the first connecting means 22 such that, in a situation in which the AC voltage supplied by the AC voltage supply system 20 is applied to the heater 18, this AC voltage is also applied to the battery charger 34 and/or the heater 36. Therefore, by use of the AC voltage, the DC voltage supply system 26 can be recharged during the heating operation. Additionally, by means of the heater 36, the interior space of the vehicle can be preheated during the heating operation of the heater 18. This heating operation of the heater 36 can be provided in parallel with a heating operation provided by the heat exchanger arrangement 30 and the fan thereof, or can be used as an alternative means.

With the heater and the heating system, respectively, of the present invention, there is provided an arrangement having a simple construction and using components which are normally present in a vehicle, in particular the pump of the coolant circuit and the DC voltage supply system. By means of the AC-voltage-triggered relay of the second connecting means, the DC voltage supplied by the DC voltage supply system can be used both for energizing the pump of the cooling circuit and for switching the relay of the third connecting means into its electrically connecting condition if the coolant temperature is above the predetermined threshold temperature.

In an alternative embodiment, instead of using the coolant temperature as one of the switching signals for bringing the third connecting means 32 into its electrically connecting condition, the DC voltage applied to the third connecting means 32 via the second connecting means 28 if the AC voltage is applied to the heater 18 may trigger a timer which, for example, may be provided within the third connecting means 32. This means that the timer starts counting time when the heater 18 starts heating. After a predetermined period of time has elapsed, the timer may generate a switching signal for then switching the third connecting means 32 into its electrically connecting condition and, therefore, applying the DC voltage of the DC voltage supply system 26 to the fan of the heat exchanger arrangement 30. This alternative embodiment makes use of the fact that it is to be expected that, after the coolant of the coolant circuit 12 has been heated during this predetermined period of time, the temperature thereof is high enough for withdrawing at least a part of the heat transported in the coolant in the heat exchanger arrangement 30 and transferring this heat to the air blown into the interior space of the vehicle by means of the fan of the heat exchanger arrangement 30. As soon as the AC voltage supply system 20 becomes disconnected from the heater 18 and the second connecting means 28 is brought into its non-conducting condition, applying the DC voltage to the third connecting means as a switching signal is terminated and the third connecting means 32 is switched into its non-connecting condition and, therefore, applying the DC voltage to the fan is terminated.

## Claims

1. Heating system for heating a heat transport liquid, in particular for heating coolant in a coolant circuit (12) of a combustion engine (14) of a vehicle, comprising:
- a heat transport liquid pump (16) for circulating a heat transport liquid in a heat transport liquid circuit (12),
- an electrically operated heater (18) for heating the heat transport liquid circulated in the heat transport liquid circuit (12) comprising:
- a first connecting means (22) for providing an electric connection between the heater (18) and an AC voltage supply system (20),
- a second connecting means (28) for providing an electric connection between a DC voltage supply system (26) and the heat transport liquid pump (16) in a condition in which an AC voltage is applied to the first connecting means (22),
- a DC voltage supply system (26) comprising at least one rechargeable battery,
**characterised in that** the second connecting means (28) is arranged such as to provide the electrical connection between the DC voltage supply system (26) and the heat transport liquid pump (16) in a condition in which an AC voltage is applied to the first connecting means (22).

2. The heating system according to claim 1, wherein the first connecting means (22) and/or the second connecting means (28) are integrated into the heater (18).

3. The heating system according to one of claims 1 or 2, wherein the second connecting means (28) comprises a relay switchable into an electrically connecting condition by an AC voltage applied to the first connecting means (22).

4. The heating system according to one of claims 1 to 3, wherein the heat transport liquid pump (16) is electrically connected to the second connecting means (28) for applying the DC voltage supplied by the DC voltage supply system (26) to the heat transport liquid pump (16) in a condition in which an AC voltage is applied to the first connecting means (22).

5. The heating system according to one of claims 1 to 4, wherein a heat exchanger arrangement (30) comprising a fan for transferring heat from the heat transport liquid to air is provided, the system further comprising a third connecting means (32) for applying the DC voltage supplied by the DC voltage supply system (26) to the fan in a condition in which an AC voltage is applied to the first connecting means (22) and a temperature of the heat transport liquid is above a predetermined threshold temperature.

6. The heating system according to claim 5, wherein the third connecting means (32) comprises a thermostat-controlled relay.

7. The heating system according to one of claims 1 to 6, wherein a heat exchanger arrangement (30) comprising a fan for transferring heat from the heat transport liquid to air is provided, the system further comprising a third connecting means (32) for applying the DC voltage supplied by the DC voltage supply system (26) to the fan in a condition in which an AC voltage is applied to the first connecting means (22) and a predetermined period of time has elapsed since the heating operation of the heater (18) has started.

8. The heating system according to one of claims 5, 6 or 7, wherein the third connecting means (32) is electrically connected to the second connecting means (28) for applying the DC voltage supplied by the DC voltage supply system (26) to the third connecting means (32) in a condition in which an AC voltage is applied to the first connecting means (22).

9. The heating system according to claim 8, wherein the third connecting means (32) is electrically connected to the DC voltage supply system (26) for providing an electric connection between the DC voltage supply system (26) and the fan in a condition in which the DC voltage supplied by the DC voltage supply system (26) to the second connecting means (28) is applied to the third connecting means (32) as a switching voltage and the temperature of the heat transport liquid is above the predetermined threshold temperature or the predetermined period of time has elapsed.

10. The heating system according to one of claims 1 to 9, wherein a charging means (34) is provided for applying a charging voltage to the DC voltage supply system (26) in a condition in which an AC voltage is applied to the first connecting means (22).

11. The heating system according to claim 10 wherein the charging means (34) is arranged for generating the charging voltage based on an AC voltage applied to the first connecting means (22).

## Patentansprüche

1. Heizsystem zum Erwärmen einer Wärmetransportflüssigkeit, insbesondere zum Erwärmen eines Kühlmittels in einem Kühlkreislauf (12) eines Verbrennungsmotors (14) eines Fahrzeugs, umfassend:
- eine Wärmetransportflüssigkeitspumpe (16) zum Umwälzen einer Wärmetransportflüssigkeit in einem Wärmetransportflüssigkeitskreislauf (12),
- einen elektrisch betriebenen Heizer (18) zum Erwärmen der in dem Wärmetransportflüssigkeitskreislauf (12) umgewälzten Wärmetransportflüssigkeit, umfassend:
- ein erstes Verbindungsmittel (22) zum Vorsehen einer elektrischen Verbindung zwischen dem Heizer (18) und einem Wechselspannungs-Versorgungssystem (20),
- ein zweites Verbindungsmittel (28) zum Vorsehen einer elektrischen Verbindung zwischen einem Gleichspannungs-Versorgungssystem (26) und der Wärmetransportflüssigkeitspumpe (16) in einem Zustand, in dem eine Wechselspannung an das erste Verbindungsmittel (22) angelegt ist,
- ein Gleichspannungsversorgungssystem (26), welches wenigstens eine wiederaufladbare Batterie umfasst,
**dadurch gekennzeichnet, dass** das zweite Verbindungsmittel (28) dazu angeordnet ist, eine elektrische Verbindung zwischen dem Gleichspannungsversorgungssystem (26) und der Wärmetransportflüssigkeitspumpe (16) in einem Zustand vorzusehen, in dem eine Wechselspannung an das erste Verbindungsmittel (22) angelegt ist.

2. Heizsystem nach Anspruch 1, wobei das erste Verbindungsmittel (22) und/oder das zweite Verbindungsmittel (28) in den Heizer (18) integriert sind.

3. Heizsystem nach einem der Ansprüche 1 oder 2, wobei das zweite Verbindungsmittel (28) ein Relais umfasst, welches durch eine an das erste Verbindungsmittel (22) angelegte Wechselspannung in einen elektrischen Verbindungszustand geschaltet werden kann.

4. Heizsystem nach einem der Ansprüche 1 bis 3, wobei die Wärmetransportflüssigkeitspumpe (16) mit dem zweiten Verbindungsmittel (28) elektrisch verbunden ist, um die von dem Gleichspannungsversorgungssystem (26) zugeführte Gleichspannung an die Wärmetransportflüssigkeitspumpe (16) in einem Zustand anzulegen, in dem die Wechselspannung an das erste Verbindungsmittel (22) angelegt ist.

5. Heizsystem nach einem der Ansprüche 1 bis 4, wobei eine Wärmetauscher-Anordnung (30) vorgesehen ist, die ein Gebläse für die Übertragung von Wärme von der Wärmetransportflüssigkeit auf Luft umfasst, wobei das System ferner ein drittes Verbindungsmittel (32) umfasst, um die von dem Gleichspannungsversorgungssystem (26) zugeführte Gleichspannung an das Gebläse in einem Zustand anzulegen, in dem eine Wechselspannung an das erste Verbindungsmittel (22) angelegt ist und eine Temperatur der Wärmetransportflüssigkeit über einer vorbestimmten Schwellentemperatur liegt.

6. Heizsystem nach Anspruch 5, wobei das dritte Verbindungsmittel (32) ein thermostatgesteuertes Relais (32) umfasst.

7. Heizsystem nach einem der Ansprüche 1 bis 6, wobei eine Wärmetauscher-Anordnung (30) vorgesehen ist, die ein Gebläse für die Übertragung von Wärme von der Wärmetransportflüssigkeit auf Luft umfasst, wobei das System ferner ein drittes Verbindungsmittel (32) umfasst, um die von dem Gleichspannungsversorgungssystem (26) zugeführte Gleichspannung an das Gebläse in einem Zustand anzulegen, in dem eine Wechselspannung an das erste Verbindungsmittel (22) angelegt ist und wobei seit Beginn des Heizvorgangs des Heizers (18) eine vorbestimmter Zeitdauer verstrichen ist.

8. Heizsystem nach einem der Ansprüche 5, 6 oder 7, wobei das dritte Verbindungsmittel (32) mit dem zweiten Verbindungsmittel (28) elektrisch verbunden ist, um die von dem Gleichspannungsversorgungssystem (26) zugeführte Gleichspannung an das dritte Verbindungsmittel (32) in einem Zustand anzulegen, in dem eine Wechselspannung an das erste Verbindungsmittel (22) angelegt ist.

9. Heizsystem nach Anspruch 8, wobei das dritte Verbindungsmittel (32) mit dem Gleichspannungsversorgungssystem (26) elektrisch verbunden ist, um eine elektrische Verbindung zwischen dem Gleichspannungsversorgungssystem (26) und dem Gebläse in einem Zustand vorzusehen, in dem die dem zweiten Verbindungmittel (28) von dem Gleichspannungsversorgungssystem (26) zugeführte Gleichspannung an das dritte Verbindungsmittel (32) als eine Schaltspannung angelegt ist und die Temperatur der Wärmetransportflüssigkeit über der vorbestimmten Schwellentemperatur liegt oder die vorbestimmte Zeitdauer verstrichen ist.

10. Heizsystem nach einem der Ansprüche 1 bis 9, wobei ein Lademittel (34) zum Anlegen einer Ladespannung an das Gleichspannungsversorgungssystem (26) in einem Zustand vorgesehen ist, in dem eine Wechselspannung an das erste Verbindungsmittel (22) angelegt ist.

11. Heizsystem nach Anspruch 10, wobei das Lademittel (34) dazu angeordnet ist, die Ladespannung auf der Basis der an das erste Verbindungsmittel (22) angelegten Wechselspannung zu erzeugen.

## Revendications

1. Système de chauffage pour chauffer une liquide de transport de chaleur, en particulier pour chauffer un réfrigérant dans un circuit de réfrigérant (12) d'un moteur à combustion (14) d'un véhicule, comprenant:
- une pompe de liquide de transport de chaleur (16) pour circuler une liquide de transport de chaleur dans un circuit de liquide de transport de chaleur (12),
- un appareil de chauffage (18) opéré électriquement pour chauffer le liquide de transport de chaleur circulé dans le circuit de liquide de transport de chaleur (12), comprenant:
- un premier moyen de connexion (22) pour prévoir une connexion électrique entre l'appareil de chauffage (18) et un système d'alimentation en tension alternative (20),
- un deuxième moyen de connexion (28) pour prévoir une connexion électrique entre un système d'alimentation en tension continue (26) et la pompe de liquide de transport de chaleur (16) dans une condition où une tension alternative est appliquée au premier moyen de connexion (22),
- un système d'alimentation en tension continue (26), comprenant au moins une batterie rechargeable,
- **caractérisé en ce que** le deuxième moyen de connexion (28) est arrangé pour prévoir la connexion électrique entre le système d'alimentation en tension continue (26) et la pompe de liquide de transport de chaleur (16) dans une condition où une tension alternative est appliquée au premier moyen de connexion (22).

2. L'appareil de chauffage selon la revendication 1, où le premier moyen de connexion (22) et/ou le deuxième moyen de connexion (28) sont intégrés dans l'appareil de chauffage (18).

3. Le système de chauffage selon une des revendications 1 ou 2, où le deuxième moyen de connexion (28) comprend un relais qui es commutable dans une condition électriquement connectant par une tension alternative appliquée au premier moyen de connexion (22).

4. Le système de chauffage selon une des revendications 1 à 3, où la pompe de liquide de transport de chaleur (16) est connectée électriquement au deuxième moyen de connexion (28) pour appliquer la tension continue fournie par le système d'alimentation en tension continue (26) à la pompe de liquide de transport de chaleur (16) dans une condition où une tension alternative est appliquée au premier moyen de connexion (22).

5. Le système de chauffage selon une des revendications 1 à 4, où un arrangement d'échangeur de chaleur (30) comprenant un ventilateur pour transférer de la chaleur du liquide de transport de chaleur à de l'air est prévu, le système comprenant en outre un troisième moyen de connexion (32) pour appliquer la tension continue fournie par le système d'alimentation en tension continue (26) au ventilateur dans une condition où une tension alternative est appliquée au premier moyen de connexion (22) et où une température du liquide de transport de chaleur est plus grande qu'une température limite prédéterminée.

6. Le système de chauffage selon la revendication 5, où le troisième moyen de connexion (32) comprend un relais contrôlé par thermostat.

7. Le système de chauffage selon une des revendications 1 à 6, où un arrangement d'échangeur de chaleur (30) comprenant un ventilateur pour transférer de la chaleur du liquide de transport de chaleur à de l'air est prévu, le système comprenant en outre un troisième moyen de connexion (32) pour appliquer la tension continue fournie par le système d'alimentation en tension continue (26) au ventilateur dans une condition où une tension alternative est appliquée au premier moyen de connexion (22) et où une période de temps prédéterminée s'est écoulée depuis le début de l'opération de chauffage de l'appareil de chauffage (18).

8. Le système de chauffage selon une des revendications 5, 6 ou 7, ou le troisième moyen de connexion (32) est connecté électriquement au deuxième moyen de connexion (28) pour appliquer la tension continue fournie par le système d'alimentation en tension continue (26) au troisième moyen de connexion (32) dans une condition où une tension alternative est appliquée au premier moyen de connexion (22).

9. Le système de chauffage selon la revendication 8, où le troisième moyen de connexion (32) est connecté électriquement au système d'alimentation en tension continue (26) pour prévoir une connexion électrique entre le système d'alimentation en tension continue (26) et le ventilateur dans une condition où la tension continue fournie par le système d'alimentation en tension continue (26) au deuxième moyen de connexion (28) est appliquée au troisième moyen de connexion (32) en tant qu'une tension de commutation et où la température du liquide de transport de chaleur est plus grande que la température limite prédéterminée ou où la période de temps prédéterminée s'est écoulée.

10. Le système de chauffage selon une des revendications 1 à 9, où un moyen de chargement (34) est prévu pour appliquer une tension de chargement au système d'alimentation en tension continue (26) dans une condition où une tension alternative est appliquée au premier moyen de connexion (22).

11. Le système de chauffage selon la revendication 10, où le moyen de chargement (34) est arrangé pour générer la tension de chargement basée sur la tension alternative appliquée au premier moyen de connexion (22).
